Europäisches Patentamt

**European Patent Office**

Office européen des brevets

(19)

(11) Numéro de publication: **0 187 110**
A1

## (12) DEMANDE DE BREVET EUROPEEN

(21) Numéro de dépôt: **85460017.8**

(22) Date de dépôt: **18.12.85**

(51) Int. Cl.⁴: **A 01 K 45/00**, B 65 G 17/32

(30) Priorité: **19.12.84 FR 8419592**
          **01.03.85 FR 8503174**

(43) Date de publication de la demande: **09.07.86**
**Bulletin 86/28**

(84) Etats contractants désignés: **AT BE CH DE FR GB IT LI
LU NL SE**

(71) Demandeur: **Lelasseux, Gérard François, 26, rue
Ambroise Paré, F-53210 Bonchamp (FR)**
Demandeur: **Gruau, Michel, Château de Moncroi,
F-53310 La Brûlatte (FR)**

(72) Inventeur: **Lelasseux, Gérard François, 26, rue Ambroise
Paré, F-53210 Bonchamp (FR)**

(74) Mandataire: **Le Guen, Louis François, Cabinet Louis Le
Guen 1, avenue Edouard VII B.P. 91, F-35802 Dinard
Cédex (FR)**

(54) **Pince de convoyeur.**

(57)    La pince sert à saisir des objets ou parties d'objets en
forme de tiges, en particulier des pattes groupées de volailles. Elle est généralement destinée à être montée sur des
dispositifs de ramassage et de convoyage de volailles.

La pince comprend deux galets fous (12, 13) en matière
élastique et un butoir (14), les galets (12, 13) étant pratiquement tangents et le butoir (14) occupant une partie de l'espace compris entre les galets (12, 13), d'un côté du point de
tangence ou de quasi-tangence. L'espace situé de l'autre
côté de ce point est accessible pour l'insertion de pattes ou
tiges. L'espace (15) entre les galets (12, 13) et le butoir (14)
a une aire inférieure à la somme des aires·des sections du
nombre de pattes ou tiges prévues pour être tenues simultanément par la pince.

Le bâti peut comporter des plaques portant les galets et
le butoir, lesdites plaques pouvant pivoter légèrement autour d'axes solidaires des côtés extérieurs du bâti.

0187110

1

"Pince de convoyeur"

La présente invention concerne des dispositifs ou pinces servant à saisir des objets ou parties d'objets en forme de tiges, en particulier des pattes groupées de volailles. En pratique, de telles pinces sont destinées à être montées sur des dispositifs de ramassage et de convoyage de volailles, mais elles peuvent également avoir d'autres applications.

Pour transporter des volailles d'un poulailler dans un camion, il existe des dispositifs qui facilitent le travail de manutention. Ces dispositifs consistent en un convoyeur, généralement constitué d'une chaîne sans fin sur laquelle sont montés des organes de préhension des volailles. Dans les dispositifs récents, les organes de préhension sont des pinces à branches articulées qui s'ouvrent automatiquement quand elles passent devant le poste de déchargement et qui restent ouvertes, ou sont ouvertes à nouveau, quand elles passent ensuite devant le poste de chargement.

Le document FR-A-2 299 251 décrit des pinces à branches qui s'ouvrent automatiquement quand elles passent devant le poste de chargement ou celui de déchargement. A ces postes, les opérateurs doivent donc agir à des moments très précis, ce qui complique le travail, en particulier pour l'accrochage qui s'effectue la plupart du temps dans l'obscurité, durant le sommeil des oiseaux.

Le document FR-A-2 427 277 décrit une pince qui s'ouvre en arrivant au poste de déchargement et qui reste ensuite en position ouverte. La fermeture de la pince a lieu en exerçant une pression des pattes des volailles contre une des branches de la pince. Celle-ci est constituée d'une branche fixe et d'une branche articulée, solidaire d'une came dont les deux positions, correspondant à l'ouverture et à la fermeture, sont assurées par un ressort-amortisseur. Cette structure à plusieurs pièces mécaniques, relativement complexe, rend le convoyeur cher, vu le grand nombre de pinces qu'il comporte.

Un objet de la présente invention consiste à prévoir des pinces pour dispositif de ramassage et de convoyage de volailles qui soient simples, donc peu coûteuses, et d'un emploi aisé.

Selon une caractéristique de l'invention, il est prévu une pince comprenant deux galets fous en matière élastique et un butoir, les galets étant pratiquement tangents et le butoir occupant une partie de l'espace compris entre les galets, d'un côté du point de tangence ou de quasi-tangence, l'espace situé de l'autre côté de ce point étant accessible pour l'insertion ou le retrait de pattes ou tiges, les galets et le butoir étant montés sur un bâti comportant une échancrure au-dessus de laquelle se trouvent le point de tangence ou de quasi-tangence des deux galets et l'espace compris entre le butoir et les deux galets, l'ouverture de ladite échancrure étant de l'autre côté du point de tangence ou de quasi-tangence par rapport au butoir.

Selon une autre caractéristique de l'invention, la matière élastique des galets a une dureté shore lui permettant de se comprimer au passage des pattes ou tiges entre les galets.

Selon une autre caractéristique de l'invention, le butoir est également en matière élastique.

Selon une autre caractéristique de l'invention, l'espace cunéiforme entre les galets et le butoir a une aire inférieure à la somme des aires des sections du nombre de pattes ou tiges prévues pour être tenues simultanément par la pince.

Selon une autre caractéristique de l'invention, le butoir a une forme cylindrique.

Selon une autre caractéristique de l'invention, la surface de l'espace cunéiforme est réglable par déplacement de l'axe du butoir cylindrique.

Pour que la pince fonctionne de façon satisfaisante, il faut que la dureté shore des galets soit telle que, d'une part, les galets se déforment assez pour qu'on puisse passer entre eux les tiges ou pattes et que, d'autre part, les limites de l'espace entre les galets et le butoir soient suffisamment rigides pour résister à la charge, c'est-à-dire au poids des objets à transporter.

Dans certaines applications, il s'avère que, pour un réglage des galets permettant une introduction ou un retrait sans difficulté des pattes ou tiges, l'espace entre les galets et le butoir devient trop grand, d'où des décrochages accidentels pendant le transport. Au contraire, un réglage satisfaisant de l'espace entre les galets et le butoir entraîne un rapprochement des galets tel qu'il est difficile de faire passer les pattes entre ceux-ci.

Un autre objet de l'invention consiste donc à prévoir une pince permettant de remédier à ce problème.

Selon une autre caractéristique de l'invention, le bâti comporte des plaques sur lesquelles sont montés les galets, lesdites plaques pivotant autour d'axes sensiblement perpendiculaires aux diamètres desdits galets passant par leur point de tangence, lesdits axes étant solidaires des côtés extérieurs des branches du bâti bordant ladite échancrure, le pivotement, vers le haut, des plaques par rapport aux faces supérieures des branches du bâti étant limité à un angle de l'ordre de 10°, les galets étant en contact par leurs bords inférieurs, légèrement pressés l'un contre l'autre, quand l'angle des plaques avec les faces des branches du bâti est maximal.

Selon une autre caractéristique de l'invention, le butoir est un galet également monté fou sur une plaque pivotant autour d'un axe de la face supérieure du bâti et sensiblement perpendiculaire aux axes des plaques supportant les deux autres galets, l'angle de pivotement maximal de la plaque du butoir étant le même que celui des plaques des autres galets.

Selon une autre caractéristique de l'invention, les bords latéraux des plaques des galets, du côté du butoir, dépassent sous la plaque du butoir et au-dessus de languettes parallèles à la plaque du butoir et solidaires de celle-ci par leur côté arrière, la distance entre les languettes et ladite plaque étant légèrement supérieure à la section des plaques des galets.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 est une vue de dessus d'un organe de préhension formé de deux pinces selon l'invention,

la Fig. 2 est une vue en coupe selon la ligne brisée II-II de la Fig. 1,

la Fig. 3 est une vue de dessous d'une pince dont les galets et le butoir sont montés sur des plaques pivotantes, et

la Fig. 4 est une vue de face de la pince de la Fig. 3.

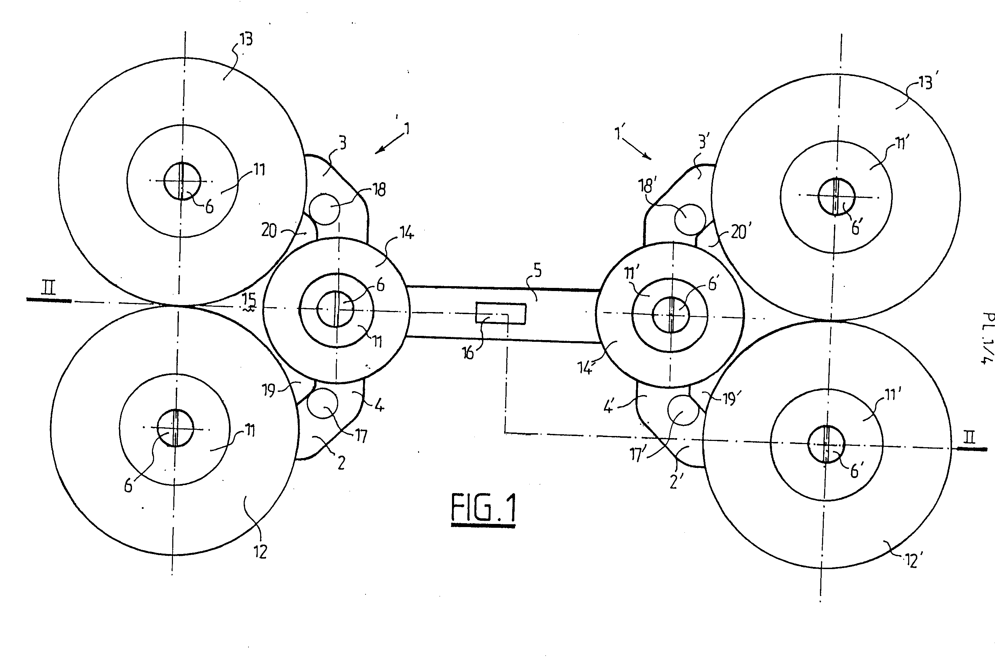

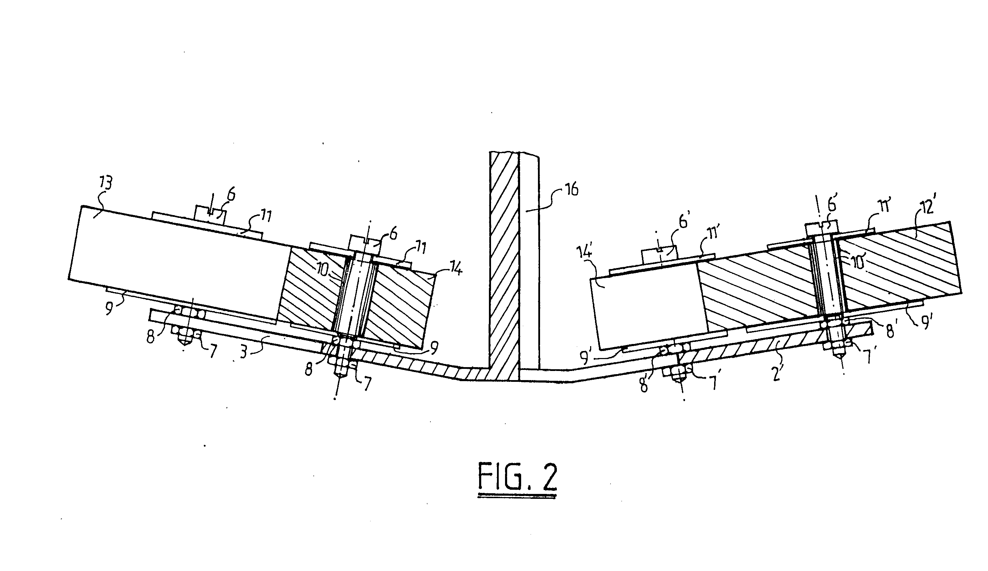

L'armature de l'organe de préhension des Figs. 1 et 2 comporte deux fourches 1 et 1'. Les fourches 1 et 1' ont des branches 2, 3, 2' et 3' et des bases 4 et 4'. Les bases 4 et 4' des fourches 1 et 1' sont réunies par un fer plat rectangulaire 5 entre leurs parties médianes. Les plans des fourches 1 et 1' sont légèrement inclinés par rapport au plan du fer plat 5, en pente descendante vers le fer plat 5. Les fourches 1 et 1' font un angle d'environ 10°, de préférence, avec le fer plat 5.

Les fourches 1 et 1' sont les bâtis de pinces identiques selon l'invention. En raison de cette similitude, les références numériques dans les dessins sont les mêmes pour les éléments correspondants des deux pinces, à ceci près qu'elles sont affectées du signe "prime" pour la pince de droite. Pour cette même raison, dans la description des pinces qui va suivre, seules les références numériques de la pince de gauche seront mentionnées.

Les extrémités libres des branches 2 et 3 et la partie médiane de la base 4 de la fourche 1 comportent des trous dans lesquels passent les parties filetées de vis 6. Les vis 6 sont fixées à la fourche 1 à l'aide d'écrous inférieurs 7 et de contre-écrous 8. Entre les contre-écrous 8 et les têtes des vis 6, sont prévus, de l'écrou vers la tête, des rondelles inférieures 9 dont le diamètre du trou est légèrement supérieur au diamètre des vis 6, des entretoises cylindriques 10 dont le diamètre est légèrement supérieur au diamètre du trou des rondelles 9, et des rondelles supérieures 11 dont le trou a un diamètre égal à celui du trou des rondelles inférieures 9, inférieur à celui de la tête de vis.

Des galets 12 et 13 sont montés sur les axes qui se trouvent aux extrémités des branches 2 et 3. Le diamètre du trou des galets 12 et 13 est légèrement plus grand que celui des entretoises 10. Leur épaisseur est sensiblement égale à la hauteur des entretoises 10. Les galets 12 et 13 sont montés autour des entretoise 10, entre les rondelles 9 et les rondelles 11. Les rayons des galets 12 et 13 sont tels que ceux-ci sont tangents, ou pratiquement tangents, par leurs côtés. Ces galets sont prévus en une matière relativement élastique, par exemple du caoutchouc ou de la mousse de néoprène.

Un galet 14 est monté sur l'axe de la base 4. Il a la même épaisseur et est monté de la même façon que les galets 12 et 13. Le rayon du galet 14 est tel que son côté affleure, sans les toucher, les côtés des galets 12 et 13. L'axe du galet 14 passe dans un trou dans la base 4 qui est de préférence oblong, son axe longitudinal étant parallèle aux branches 2 et 3. La forme oblongue des trous permet un réglage du positionnement du galet 14 en fonction de l'usage prévu pour les pinces (petites volailles ou grosses volailles). De préférence, le galet 14 est dans la même matière que les galets 12 et 13.

La rondelle inférieure 9 qui se trouve au-dessous du galet 12 ou 13, est rigide et a un rayon légèrement inférieur à celui du galet qu'elle supporte. La rondelle supérieure 11 peut avoir la même dimension que la rondelle inférieure qui lui correspond, ou être plus petite.

Comme le montre la Fig. 1, les galets 12, 13 et 14 délimitent un espace sensiblement cunéiforme 15. On voit que selon la position de l'axe du galet 14 dans le trou oblong de la base 4, la grandeur de l'espace 15 varie. A ce sujet, on peut prévoir une forme autre que circulaire pour le galet 14, si bien qu'en le faisant tourner d'un certain angle, on fait varier la grandeur de l'espace 15.

Le fonctionnement de la pince est très simple. Celle-ci fait partie d'un organe de préhension monté rigide sur une chaîne de convoyage à l'aide d'une tige 16 dont l'extrémité inférieure est reliée de façon rigide à la plaque 5. Pour accrocher des volailles avec une pince, on présente plusieurs pattes simultanément entre les galets 12 et 13 des branches 2 et 3. En appuyant alors sur les pattes, parallèlement aux branches 2 et 3, les pattes entraînent en rotation, et déforment légèrement, les galets 12 et 13. Les pattes arrivent alors dans l'espace 15, suffisamment petit pour qu'elles y soient tenues serrées entre les côtés des galets 12, 13 et 14. A titre indicatif, une pince peut supporter trois ou quatre volailles simultanément. Sous une telle charge, les galets 12, 13 et 14 pourraient avoir tendance à se déformer. C'est pourquoi il est prévu des rondelles inférieures 9 dont le rayon n'est que légèrement inférieur à celui des galets correspondants. Par contre, il est important, pour les rondelles 9 des galets 12 et 13 que la différence de rayon entre les galets et les rondelles soit supérieure à l'aplatissement que subissent les galets 12 et 13 lors du passage des pattes.

Pour décrocher les volailles de la pince, il suffit de tirer les pattes emprisonnées vers l'extérieur, parallèlement aux branches 2 et 3. Les pattes entraînent alors en rotation, et déforment légèrement, les galets 12 et 13, puis se libèrent.

Sur le même organe de préhension, une pince peut être plus chargée que l'autre. Ce déséquilibre peut entraîner une certaine inclinaison de la tige 16 par rapport à la verticale. Si les fourches 1 et 1' des deux pinces était dans le même plan, le plan des galets 12 et 13 de l'une d'elles serait alors en pente descendante vers l'extérieur. De ce fait, les pattes des volailles supportées par la pince exerceraient une force vers l'extérieur et pourraient se décrocher. C'est pourquoi il est prévu un certain angle, de 10° environ, entre les plans des fourches 1 et 1' des pinces et le plan de la plaque 5. On peut également noter que l'inclinaison par rapport à la verticale de la tige 16 est limitée du fait que les organes de préhension sont fixés rigides aux maillons de la chaîne de convoyage, et ont leur axe longitudinal parallèle à ladite chaîne de convoyage.

La fourche 1, comme la fourche 1', peut comporter deux butées 17 et 18. Pour la clarté des dessins, les butées 17, 18, 17' et 18' ont été représentées uniquement sur la Fig. 1. Les butées 17 et 18 sont des têtons de forme cylindrique disposés dans les angles de la fourche 1, avec des axes parallèles à ceux des galets 12, 13 et 14, leur base étant pratiquement tangente avec le bord intérieur de la fourche. Lesdits têtons sont des tiges métalliques enrobées d'une matière souple, telle que du caoutchouc ou de la mousse de néoprène. Ils ont une hauteur inférieure à celle des galets 12, 13 et 14.

Les butées 17 et 18 sont prévues pour éviter le contact des pattes avec la fourche métallique 1 lorsque, par mégarde, celles-ci sont introduites dans les espaces 19 et 20 qui se trouvent de l'autre côté de l'espace cunéiforme 15 par rapport aux points de quasi-tangence du galet 14 avec les galets 12 et 13. Bien entendu, les butées 17 et 18 peuvent avoir une autre forme que cylindrique.

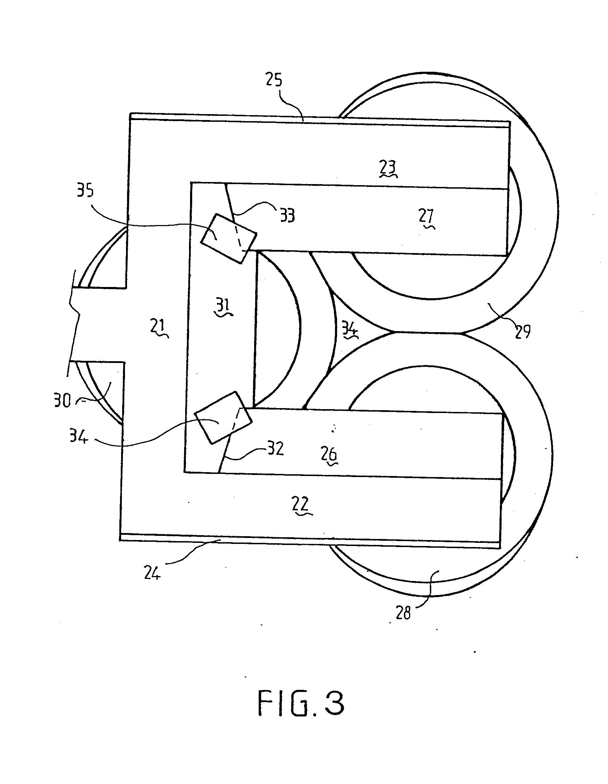

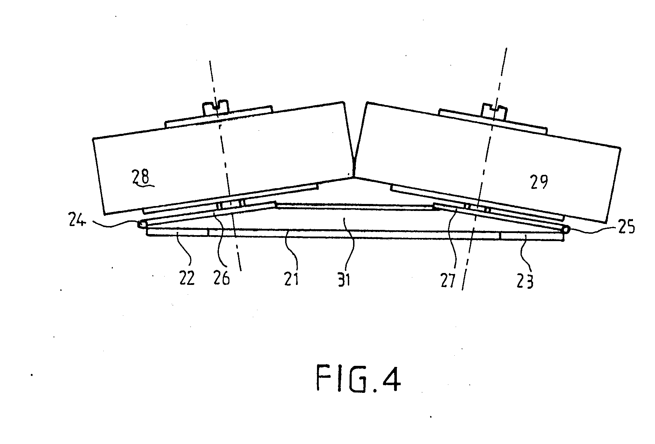

Comme précédemment, le bâti de la pince représentée aux Figs. 3 et 4 a la forme d'une fourche comportant une base 21 et deux branches 22 et 23. Les bords extérieurs des faces supérieures des branches 22 et 23 comportent des charnières 24 et 25, Fig. 4, sur lesquelles sont articulées des plaques sensiblement rectangulaires 26 et 27. Sur les plaques 26 et 27, sont montés fous des galets 28 et 29 autour d'axes perpendiculaires auxdites plaques. L'angle maximal de pivotement, vers le haut, des plaques 26 et 27 par rapport au plan de la face supérieure des branches 22 et 23 est de l'ordre de 10°. Ledit angle de pivotement est limité par un moyen qui sera décrit ultérieurement. Quand l'inclinaison des plaques 26 et 27 est maximale, les galets 28 et 29 sont en contact par leurs bords inférieurs, légèrement pressés l'un contre l'autre et donc légèrement déformés au point de contact.

De même, le butoir ou galet 30 est monté fou sur une plaque 31 articulée sur une charnière, non montrée, solidaire de la face supérieure de la base 21 et sensiblement perpendiculaire aux charnières 24 et 25. L'angle maximal de pivotement, vers le haut, de la plaque 31 est le même que celui des plaques 26 et 27. Quand les plaques 26, 27 et 31 ont leur inclinaison maximale, le galet 30 est en contact avec les galets 28 et 29, légèrement pressé et donc légèrement déformé aux points de contact avec les galets 28 et 29.

Les côtés latéraux 32 et 33 des plaques 26 et 27, côté butoir, passent sous la plaque 31. Chaque côté 32 ou 33 se trouve entre la plaque 31 et une languette 34 ou 35 fixée à celle-ci par son côté arrière. Les languettes 34 et 35 sont sensiblement parallèles à la plaque 31 et la distance qui les sépare de la plaque 31 est légèrement supérieure à la section des plaques 26 et 27. De cette façon, l'une quelconque des plaques 26, 27 ou 31 ne peut pivoter sans entraîner les deux autres plaques dans son mouvement. L'angle de pivotement maximal, vers le haut, des plaques 26, 27 et 31 est déterminé par au moins une butée solidaire de la fourche du bâti, non montrée, passant au-dessus d'une des plaques 26, 27 ou 31. Elle est disposée entre l'un des galets 28 ou 29 et le butoir 30.

Comme les galets 28, 29 et 30 sont pressés les uns contre les autres, quand ils sont libres d'une contrainte extérieure, ils prennent la position la plus inclinée les uns par rapport aux autres et l'inclinaison des plaques 26, 27 et 31 est· donc maximale. Quand on introduit une charge dans l'espace 34 entre les galets, sous l'effet du poids, les plaques 26, 27 et 31 s'abaissent jusqu'à l'horizontale. Les distances entre les points de tangence et les axes des galets 28, 29 et 30 diminuent, d'où une force de contact accrue entre les galets et une réduction de l'espace 34 assurant une préhension satisfaisante. Au déchargement, au lieu de tirer latéralement les pattes directement vers l'extérieur, l'opérateur les soulève d'abord, ce qui entraîne le pivotement des plaques 26, 27 et 31 jusqu'à l'inclinaison maximale et, par conséquent, une réduction de la force de contact des galets 28 et 29 facilitant le passage des pattes entre eux.

9

REVENDICATIONS

1) Pince servant à saisir des objets ou parties d'objets en forme de tiges, en particulier des pattes groupées de volailles, caractérisée en ce qu'elle comprend deux galets fous (12, 13) en matière élastique et un butoir (14), les galets (12, 13) étant pratiquement tangents et le butoir (14) occupant une partie de l'espace compris entre les galets (12, 13), d'un côté du point de tangence ou de quasi-tangence, l'espace situé de l'autre côté de ce point étant accessible pour l'insertion de pattes ou tiges, les galets (12, 13) et le butoir (14) étant montés sur un bâti (1) comportant une échancrure au-dessus de laquelle se trouvent le point de tangence ou de quasi-tangence des deux galets (12, 13) et l'espace (15) compris entre le butoir (14) et les deux galets (12, 13), l'ouverture de ladite échancrure étant de l'autre côté du point de tangence ou de quasi-tangence par rapport au butoir (14), et l'espace (15) entre les galets (12, 13) et le butoir (14) ayant une aire inférieure à la somme des aires des sections du nombre de pattes ou tiges prévues pour être tenues simultanément par la pince.

2) Pince selon la revendication 1, caractérisée en ce que la matière élastique des galets (12, 13) a une dureté shore lui permettant de se comprimer au passages des pattes ou tiges entre les galets (12, 13).

3) Pince selon la revendication 1 ou 2, caractérisée en ce que le butoir (14) est également en matière élastique.

4) Pince selon une des revendications 1 à 3, caractérisée en ce que le butoir (14) a une forme cylindrique.

5) Pince selon une des revendications 1 à 4, caractérisée en ce que la surface de l'espace cunéiforme (15) est réglable par déplacement de l'axe du butoir (14).

6) Pince selon une des revendications 1 à 5, caractérisée en ce que le bord interne de la fourche (1) est protégé par un revêtement ou une butée (17, 18), aux endroits où le bord interne de la fourche (1) n'est pas recouvert par les galets (12, 13) et le butoir (14).

7) Pince selon une des revendications 1 à 6, caractérisée en ce que le bâti comporte des plaques (26, 27) sur lesquelles sont montés les galets (28, 29), les plaques (26, 27) pivotant autour d'axes (24, 25) sensiblement perpendiculaires aux diamètres des galets (28, 29) passant par leur point de tangence, les axes (24, 25) étant solidaires des côtés extérieurs des branches (22, 23) du bâti bordant ladite échancrure, le pivotement, vers le haut, des plaques (26, 27) par rapport aux faces supérieures des branches (22, 23) étant limité à un angle de l'ordre de 10°, les galets (28, 29) étant en contact par leurs bords inférieurs, légèrement pressés l'un contre l'autre, quand l'angle des plaques (26, 27) avec les faces des branches (22, 23) est maximal.

8) Pince selon la revendication 7, caractérisée en ce que le butoir est un galet (30) également monté fou sur une plaque (31) pivotant autour d'un axe solidaire de la face supérieure du bâti (21) et sensiblement perpendiculaire aux axes (24, 25) des plaques (26, 27) supportant les deux autres galets (28, 29), l'angle de pivotement maximal de la plaque (31) du butoir étant le même que celui des plaques (26, 27) des autres galets (28, 29).

9) Pince selon la revendication 8, caractérisée en ce que les bords latéraux des plaques (26, 27) des galets (28, 29), du côté du butoir (30), dépassent sous la plaque (31) du butoir et au-dessus de languettes (34, 35) parallèles à la plaque (31) du butoir et solidaires de celle-ci par leurs bords arrière, la distance entre les languettes (34, 35) et ladite plaque (31) étant légèrement supérieure à la section des plaques (26, 27) des galets (28, 29).

FIG.1

FIG.2

FIG.3

FIG.4

0187110

0187110
Numéro de la demande

Office européen
des brevets

**RAPPORT DE RECHERCHE EUROPEENNE**

EP 85 46 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 479 786 (LOISEAU) <br> * revendication 1; figures 1-4 * | 1 | A 01 K 45/00 <br> B 65 G 17/32 |
| | --- | | |
| D,A | FR-A-2 427 277 (S.E.R.N.) <br> * revendication 1; figures 3-5 * | 1 | |
| | --- | | |
| D,A | FR-A-2 299 251 (RAHER) <br> * revendication 1 * | 1 | |
| | ----- | | |

**DOMAINES TECHNIQUES RECHERCHES (Int. Cl. ³)**

A 01 K 45/00
A 22 C 21/00
B 65 G 17/00

Le présent rapport de recherche a été établi pour toutes les revendications

| Lieu de la recherche | Date d'achèvement de la recherche | Examinateur |
|---|---|---|
| BERLIN | 28-03-1986 | SIMON J J P |